# EUROPEAN PATENT SPECIFICATION

(11) **EP 0 781 906 B1**
(45) Date of publication and mention of the grant of the patent: **05.12.2001**
(21) Application number: 95930732.3
(22) Date of filing: 12.09.1995
(51) Int. Cl.: F02B 67/06

(54) **APPARATUS FOR DRIVING ALTERNATOR OF ENGINE, AND ALTERNATOR FOR ENGINE ACCESSOIRES USED THEREFOR**
GERAT ZUM ANTREIBEN EINER WECHSELSTROMMASCHINE UND WECHSELSTROHMMASCHINE FUR MASCHINENZUBEHORTEILE HIERFUR VERWENDET
DISPOSITIF D'ENTRAINEMENT D'UN ALTERNATEUR DE MOTEUR, ET ALTERNATEUR DESTINE A DES ELEMENTS DE MOTEUR

(30) Priority: 14.09.1994 JP 22038494
(43) Date of publication of application: 02.07.1997
(73) Proprietor: BANDO CHEMICAL INDUSTRIES, LTD., Kobe-shi, Hyogo 652-0883 (JP)
(72) Inventor: MIYATA, Hirofumi Bando Chemical Industries, Ltd., Hyogo-ku Kobe-shi Hyogo 652 (JP)
(74) Representative: Zinnecker, Armin, Dipl.-Ing.
(86) International application number: JP9501802
(87) International publication number: WO9608642

(56) References cited:
- DE-A- 3 331 807
- DE-A- 3 523 999
- DE-A- 4 312 006
- FR-A- 2 628 810
- JP-A- 1 150 026
- JP-A- 62 113 953
- JP-U- 3 005 939

## Description

### [Technical Field]

This invention relates to an alternator driving apparatus of an engine and an alternator as an engine auxiliary used in the same, and particularly relates to the improvement of a rotation transmitting path, in which a rotatively driving force of a crank shaft followed by slight variations in angular velocity due to an explosion stroke of the engine is transmitted through a power transmission belt to an alternator shaft of an alternator which is provided with a rotor having inertia for rotation larger than a load for electric power generation.

### [Background Art]

For example, in a four-stroke cycle automobile engine in which one cycle is formed of a suction stroke, a compression stroke, an explosion stroke and an exhaust stroke, driving energy is produced only in the explosion stroke and no driving energy is produced in other strokes. Therefore, as is known in the art, the four-stroke cycle engine has a characteristic that a rotatively driving force of the crank shaft is always followed by slight variations in angular velocity. When an engine auxiliary is driven using the above automobile engine as a driving source, the use of an alternator as the engine auxiliary produces the following problems in association with slight variations in angular velocity of the crank shaft. In the alternator, since a rotor connected to the alternator shaft so as to rotate together has large inertia for rotation (moment of inertia), its rotating inertia torque is large. On the other hand, since torque for electric power generation as load torque is no more torque than required for the rotor to transverse the magnetic field of a stator, the magnitude of the torque is small. Hence, when the rotor is driven by the crank shaft causing the above-mentioned slight variations in angular velocity, a momentary inverse power transmission occurs in a rotation transmitting path between the crank shaft and the rotor through a power transmission belt. Namely, at the time of decrease in angular velocity during slight variations in angular velocity (hereinafter, referred to as the time of decrease in angular velocity) of the crank shaft, the rotor is reduced in rotational speed so that power having transmitted from the crank shaft to the rotor is returned to the crank shaft. On the other hand, at the time of increase in angular velocity during slight variations in angular velocity (hereinafter, referred to as the time of increase in angular velocity) of the crank shaft, the rotor having no rotatively driving force is rotatively accelerated by the crank shaft again. In such an inverse power transmission, the power transmission belt is always subjected to torque that rotating inertia torque is added to torque for electric power generation. At the time, the rotating inertia torque is extremely larger than the torque for electric power generation. This invites early breakage of the belt and noise production due to belt slip.

The applicant has proposed a technique for solving the above problem in the prior Japanese patent application (Application No. 61-228153), wherein a one-way clutch is interposed between an alternator shaft such above and a pulley on the alternator shaft to transmit a rotatively driving force of the crank shaft to the alternator shaft at the time of increase in angular velocity of the crank shaft while interrupting transmission of rotation between the alternator shaft and the pulley at the time of decrease in angular velocity of the crank shaft so as not to inversely transmit rotating inertia torque of the rotor to the crank shaft through the power transmission belt.

According to the above proposal, when the alternator is rotatively driven by the crank shaft of the engine through a power transmission belt, an inverse power transmission is not produced from the rotor to the crank shaft at the time of decrease in angular velocity of the crank shaft and therefore the rotor causes no reduction in rotational speed due to such an inverse power transmission. This extensively reduces torque to be subjected by the power transmission belt at the time of increase in angular velocity of the crank shaft. Accordingly, early breakage of the belt and noise production due to belt slip can be prevented thereby increasing the life time of the power transmission belt. As a result, belt drive to an alternator, e.g., an alternator as a diesel engine auxiliary becomes feasible. Further, since the above-mentioned technique has a simple structure that a one-way clutch is interposed between the alternator shaft and the pulley, it can be readily implemented.

### -Technical Problems-

However, in the case that the above alternator driving apparatus is equipped with a one-way clutch, it is necessary that the pulley is relatively rotatably supported to the alternator shaft. For this reason, the alternator driving apparatus is subjected to the constraint that the one-way clutch must be provided at both ends along the axis of the alternator shaft with respective bearings for the pulley. For example, in the case of using a wide power transmission belt such as a V-ribbed belt, a pulley used has a large width. Therefore, above two bearings can be provided within the pulley width. On the contrary, in the case of using a narrow power transmission belt such as a V-belt, a pulley used has a small width so that bearings lie off the pulley width. This requires to extend the pulley width for the bearings. As a result, the pulley is displaced in its axial direction by the width of the alternator-side bearing so that the power transmission belt is changed in position. Correspondingly, it is required that the overall layout of the driving apparatus is changed. This makes it difficult to say that the driving apparatus can be readily implemented.

Further, the bearings are subjected to all shaft load applied from the belt to the shaft through the pulley. However, relatively low-cost bearings such as rolling bearings and sliding bearings cannot sufficiently bear the above large shaft load. As a result, the cost for bearings is high. This also prevents the implementation of the above driving apparatus.

Furthermore, diesel engine-mounted automobiles are generally provided with a vacuum pump for brake. The vacuum pump is often power-transmittably connected to the alternator shaft. In this case, when the one-way clutch causes a defective operation so that the alternator shaft falls into an unrotating state, not only the alternator but also the vacuum pump cannot be driven.

Even if the one-way clutch is disposed on an engine-side pulley instead of the alternator-side pulley, similar problems occur.

The present invention has been made in view of the above problems. As mentioned above, in implementation of an alternator driving apparatus capable of reducing a load of a power transmission belt by disposing a one-way clutch, bearings are required because of the provision of the one-way clutch. A principal object of the invention is to eliminate the need for overall layout change of the alternator driving apparatus due to extension of an alternator shaft and the like by changing a disposed position of the one-way clutch, even if a pulley width is small, thereby further facilitating the implementation of the alternator driving apparatus with the above one-way clutch.

### [Disclosure of Invention]

To attain the above object, an apparatus according to claim 1 is provided.

### [Brief Description of Drawings]

Fig. 1 is a schematic front view showing the layout of an alternator driving apparatus of an engine according to an embodiment of the present invention.

Fig. 2 is a longitudinal cross-sectional view showing the structure of an alternator.

Fig. 3 is an enlarged diagrammatic cross-sectional view showing a necessary part of a one-way clutch disposed in the alternator.

Fig. 4 is a diagrammatic waveform chart showing variations in rotation of the rotor of a conventional alternator together with slight variations in angular velocity of a crank shaft.

Fig. 5 is a diagram corresponding to Fig. 4, which shows an operation of the alternator of the above embodiment.

Fig. 6 is a diagrammatic waveform chart showing an operation of a one-way clutch in which an angle of operational delay of an inner race with respect to an outer race is larger than an angle of slight displacement of slight variations in angular velocity of the inner race.

Fig. 7 is a diagram corresponding to Fig. 6, which shows an operation of the one-way clutch of the above embodiment.

### [Best Mode for Carrying Out the Invention]

Below, an embodiment of the present invention will be described with reference to the drawings.

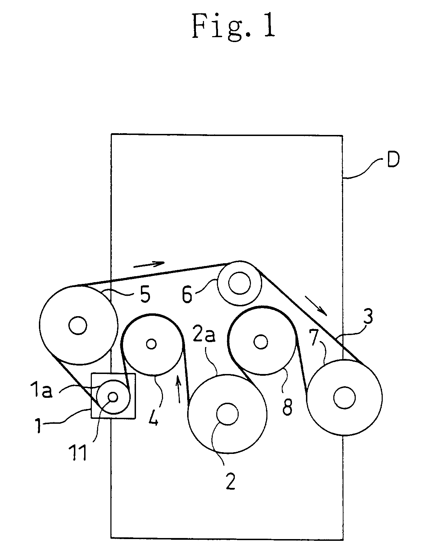

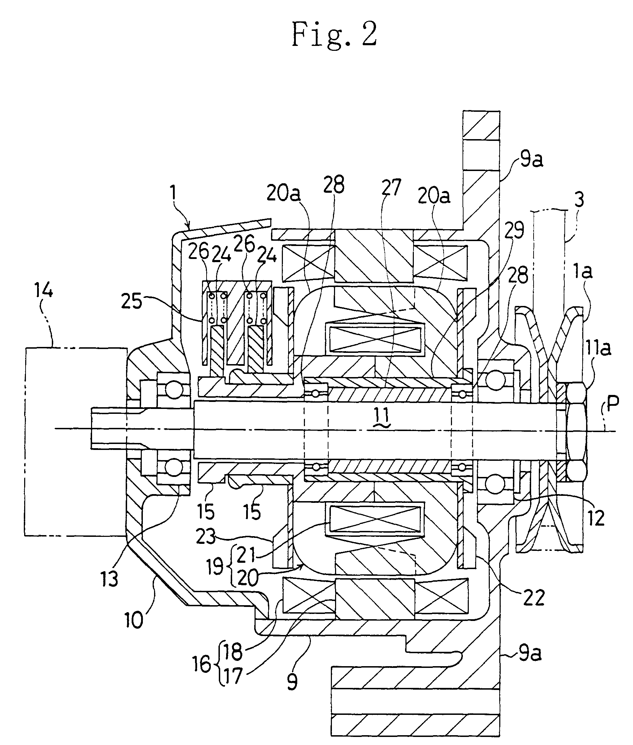

Fig. 1 schematically shows the layout of an alternator driving apparatus of an automobile engine according to an embodiment of the present invention, which is seen from the front side of the automobile. Fig. 2 shows the structure of an alternator 1 used in the driving apparatus. In Fig. 2, the right side corresponds to the front side of the automobile and the left side corresponds to the rear side thereof.

The alternator driving apparatus is provided on the front side of a diesel engine D longitudinally mounted in an automobile, and has a commonly called serpentine layout in which a single V-belt 3 as a power transmission belt is wound in serpentine form around a driving pulley 2a connected to the front side end of a crank shaft 2 of the engine D so as to rotate together with the crank shaft 2, and a plurality of driven pulleys respectively connected to the front side ends of driven shafts of a plurality of engine auxiliaries so as to respectively rotate together with the driven shafts. More specifically, as shown by arrows in Fig. 1, in the order of the running direction of the V-belt 3 from the driving pulley 2a, a tension pulley 4 of an auto-tensioner, a pulley 5 for driving a hydraulic pump of a power steering, an idler pulley 6, a pulley 7 for driving a compressor of an air conditioner and a fan pulley 8 for cooling the engine D are arranged. Further, a pulley 1a of the alternator 1 is disposed between the pulley 4 of the auto-tensioner and the pulley 5 of the power steering. The belt 3 is wound at the back face side only with respect to the tension pulley 4 and the fan pulley 8.

As shown in detail in Fig. 2, the alternator 1 has a front cover 9 and a rear cover 10 which are each formed into a cylinder having a bottom and are integrally assembled so as to be opposed at their openings to each other. The alternator 1 is designed to be fixed, to the engine D, at two mount portions 9a, 9a which each protrude from the front side of the outer periphery of the front cover 9. An alternator shaft 11 of the alternator 1 is supported through a front bearing 12 and a rear bearing 13 so as to be rotatable on its axis P with penetrating bottom walls of both the covers 9, 10. A hexagon nut 11a is screwed in a front side end of the alternator shaft 11 which protrudes toward the front side from the front cover 9, thereby connecting the pulley 1a to the alternator shaft 11 so as to rotate the pulley 1a together with the alternator shaft 11. On the other hand, a vacuum pump 14 for brake is connected to the other end of the alternator shaft 11 which protrudes toward the rear side from the rear cover 10 so as to rotate together with the alternator shaft 11. Further, axially displaced two slip rings 15, 15 are disposed, at the front side portion inside the rear cover 10, on the alternator shaft 11 so as to rotate together with the alternator shaft 11.

On the inner periphery of the front cover 9, a stator 16 of the alternator 1 is disposed in annular form around the axis P. The stator 16 is composed of: a stator core 17 whose inner periphery has a plurality of slots formed at regular intervals in a circumferential direction; and a stator coil 18 wound around the stator core 17. The stator coil 18 has three phases, i.e., a U phase, a V phase and a W phase, which are staggered 120° apart from each other thereby producing magnetic fields at an inner space of the stator 16.

Further, a rotor 19 of the alternator 1 is disposed concentrically on the alternator shaft 11. The rotor 19 is composed of: a ringed rotor core 20 fit on the alternator shaft 11 with a space left; and a field coil 21 which is wound around the rotor core 20 and is electrically connected at one end to one of the slip rings 15 and at the other end to the other slip ring 15. The rotor core 20 is formed of a pair of pole cores 20a, 20a which are outwardly fit on the alternator shaft 11 and are axially opposed to each other. Both the pole cores 20a, 20a are fit on a cylindrical member 29 fit on the alternator shaft 11 with a space left and are connected to each other so as to rotate together. A front fan 22 and a rear fan 23 are connected to the front side and rear side of the rotor 19 respectively so as to rotate together with the rotor 19. The front fan 22 and the rear fan 23 cool the inner space of the alternator 1 in association with rotation of the rotor 19.

In a space located on the rear sides of the stator 16 and the rotor 19, disposed are two brushes 24, 24, a brush holder 25 for holding the brushes 24 so as to move them forward and backward with respect to the alternator shaft 11 individually, and helical compression springs 26 for pushing the brushes 24 toward the alternator shaft 11 respectively. Each of the brushes 24 is adjusted at an end thereof to slide on the outer periphery of the corresponding slip ring 15. Further, the below-mentioned voltage regulating circuit is electrically connected to a base end of one of the brushes 24 and one end of the stator coil 18 is connected to a base end of the other brush 24, though they are not shown. Furthermore, in the alternator 1, disposed are: a full-wave rectifying circuit so composed that 6 diodes are connected in bridge form; and the voltage regulating circuit for regulating an output voltage of the alternator 1 so that the field coil 21 of the rotor 19 is controlled in current according to the output voltage of the alternator 1.

Between the alternator shaft 11 and the rotor 19, a one-way clutch 27 is interposed for transmitting to the rotor 19 a rotating force of the alternator shaft 11 from the crank shaft 2 at the time of increase in angular velocity (the time of increase in angular velocity during slight variations in angular velocity) of the crank shaft 2 and interrupting transmission of rotation between the rotor 19 and the alternator shaft 11 at the time of decrease in angular velocity (the time of decrease in angular velocity during slight variations in angular velocity) of the crank shaft 2 so as to prevent an inverse power transmission to the crank shaft 2 of rotating inertia torque of the rotor 19 through the V-belt 3. A pair of bearings 28, 28 are disposed between the alternator shaft 11 and the rotor 19. The rotor 19 is supported on the alternator shaft 11 by both the bearings 28, 28 so as to be relatively rotatable with respect to the alternator shaft 11. The one-way clutch 27 is disposed within a cylindrical space defined by the alternator shaft 11, the rotor 19 and both the bearings 28, 28.

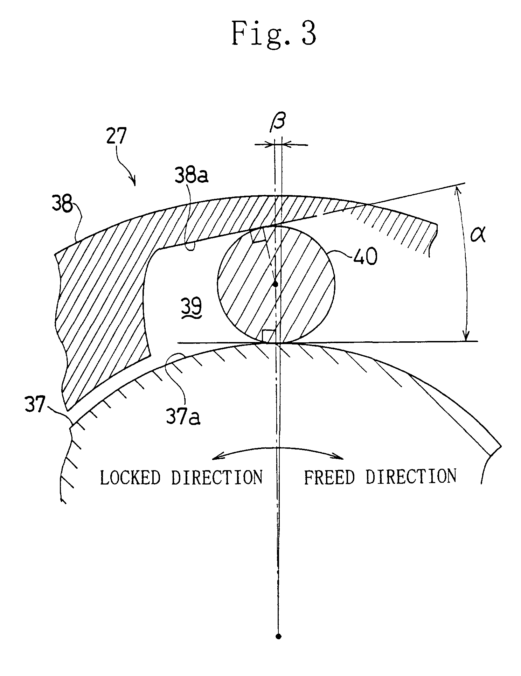

The one-way clutch 27 is an outer roller type one. As partially shown in an enlarged manner in Fig. 3, the one-way clutch 27 includes: an inner race 37 as a driving side rotating member connected to the alternator shaft 11 so as to rotate together with the alternator shaft 11; and an outer race 38 as a driven side rotating member which is connected to the rotor 19 so as to rotate together with the rotor 19 and is engageable with the inner race 37 through a plurality of clutch rollers 40, 40, ... (only one of them is shown in the figure) in its rotating direction. On the inner periphery of the outer race 38, a plurality of concavities 39, 39, ... (only one of them is shown in the figure) are formed at established intervals along the circumferential direction of the outer race 38. The clutch rollers 40 are disposed in the concavities 39 respectively. The inner periphery 38a of the outer race 38 is formed at each concavity 39 so that the radial distance from the outer periphery 37a of the inner race 37 is gradually reduced counterclockwise. In detail, a tangent passing through a contact point between the outer race 38 and the roller 40 is inclined by a specified angle α to a tangent passing through a contact point between the inner race 37 and the roller 40. Thereby, at the time of relative rotation in a locked direction (counterclockwise in the figure) of the inner race 37 with respect to the outer race 38, each roller 40 is fit into a space between the outer periphery 37a of the inner race 37 and the inner periphery 38a of the outer race 38 so that under such a wedging effect an engaging relationship between both the races 37, 38 is switched into a locked state, and on the other hand, at the time of relative rotation in a freed direction (clockwise in the figure) of the inner race 37 with respect to the outer race 38, the engaging relationship between both the races 37, 38 is switched into a freed state. Each of the rollers 40 is pushed counterclockwise by a clutch spring at all times though it is not shown.

An angle β of operational delay of the inner race 37 with respect to the outer race 38 until the engaging relationship between the inner race 37 and the outer race 38 is switched from the freed state to the locked state at the time of increase in angular velocity of the crank shaft 2, is set to a value smaller than an angle s of slight displacement of slight variations in angular velocity which is transmitted from the crank shaft 2 to the inner race 37 (β < s). The angle β of operational delay is determined in accordance with an angle α of tilt of the inner periphery 38a of the outer race 38. Accordingly, the angle β of optional delay can be increased with the increase in angle α of tilt, while the angle β of optional delay can be decreased with the decrease in angle α of tilt.

Next, operations of the alternator driving apparatus of the engine will be described. In the following description, the inner race 37 of the one-way clutch 27 and the crank shaft 2 of the engine D are supposed to rotate at the same rotational speed.

At the time of increase in angular velocity of the crank shaft 2 of the diesel engine D, the one-way clutch 27 becomes in a locked state to establish the rotation transmitting path between the crank shaft 2 and the rotor 19 of the alternator 1 through the V-belt 3, so that the rotor 19 is driven into rotation by a rotatively driving force of the crank shaft 2. On the other hand, at the time of decrease in angular velocity of the crank shaft 2, the one-way clutch 27 becomes in a freed state to interrupt the rotation transmitting path, so that the rotating inertia torque of the rotor 19 is avoided from being inversely transmitted to the crank shaft 2 through the V-belt 3. Thereafter, when the rotor 19 is gradually reduced in rotational speed due to a load for electric power generation or mechanical losses in the alternator 1 and the crank shaft 2 is increased in angular velocity again, the one-way clutch 27 turns to the locked state so that a rotatively driving force of the crank shaft 2 is transmitted to the rotor 19 of the alternator 1 through the one-way clutch 27.

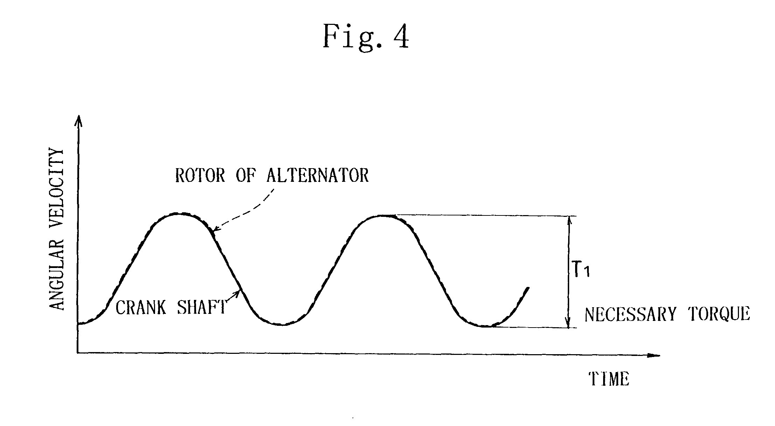

In general, a crank shaft produces slight variations in angular velocity of maximum 6-8° at the time of rotation of a diesel engine (maximum 1.5-2.0° at the time of rotation of a gasoline engine). If seen in extremely short cycle such as a 1/60 second, the angular velocity of the crank shaft periodically varies as shown by a solid line in Fig. 4.

In the case of an alternator driving apparatus without one-way clutch, power having transmitted from the crank shaft to the alternator shaft (rotor) returns to the crank shaft at the time of decrease in angular velocity of the crank shaft, and then rotatively accelerates again the rotor (alternator shaft) of the alternator having no rotatively driving force at the time of increase in angular velocity of the crank shaft. When such an operation is repeated so that power is inversely transmitted, as shown by dashed lines in Fig. 4, the power transmission belt is always subjected to necessary torque T₁ for driving the rotor, in which rotating inertia torque just required to drive the rotor against its inertia for rotation is added to torque for electric power generation required for the rotor to transverse the magnetic field. Since the rotating inertia torque is extremely larger than the torque for electric power generation, the rotating inertia torque occupies a large part of the necessary torque T₁. This results in early breakage of the belt.

On the contrary, the alternator driving apparatus of the present embodiment establishes rotation transmission from the crank shaft 2 to the rotor 19 through the belt 3 at the time of increase in angular velocity of the crank shaft 2 while interrupting the rotation transmission at the time of decrease in angular velocity of the crank shaft 2 so as not to provide an inverse power transmission to the crank shaft 2 of rotating inertia torque of the rotor 19 through the belt 3. Thereby, at the time of decrease in angular velocity of the crank shaft 2, an inverse power transmission from the rotor 19 to the crank shaft 2 can be prevented so that power having transmitted from the crank shaft 2 to the alternator shaft 11 remains as rotating torque to the rotor 19. The rotating torque can be expended only on power for driving the alternator 1 (load for electric power generation) , and an expenditure of the rotating torque is small.

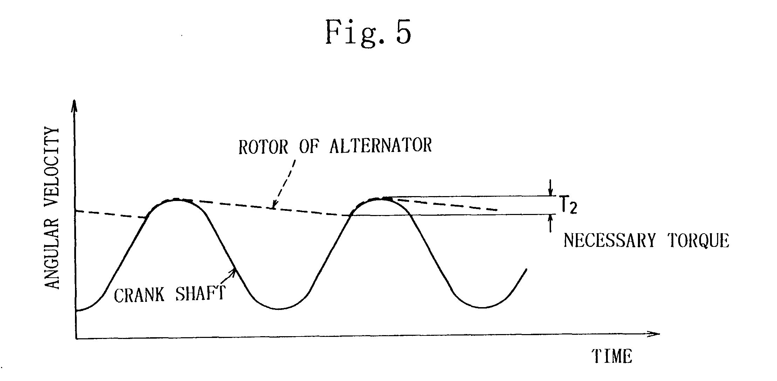

As shown in Fig. 5, at the time of increase in angular velocity of the crank shaft 2, torque to which the belt 3 is subjected is no more than rotating inertia torque just accelerating the amount of reduction in rotation of the alternator shaft 11. In other words, this rotating inertia torque is necessary torque T₂ for driving the rotor 19, which is extensively smaller than the necessary torque T₁ in the case of having no one-way clutch (T₂ < T₁). Though the actual necessary torque T₂ becomes larger according to increase in torque for electric power generation, the necessary torque T₂ to be subjected by the belt 3 is securely reduced by at least a difference between the former and latter rotating inertia torque. Extremely speaking, if a load for electric power generation is zero, it is essential only that power to be input by the alternator shaft 11 has just an amount of natural reduction in rotation of the alternator shaft 11. In this case, the necessary torque T₂ to be subjected by the belt 3 comes close to zero. On the contrary, in the apparatus without one-way clutch, even if a load for electric power generation is zero, rotating inertia torque is required by an amount necessary for accelerating the rotor having decreased in rotational speed due to variations in angular velocity of the crank shaft, so that the necessary torque T₁ to be subjected by the belt is considerably large.

In the cases of engine auxiliaries other than the alternator, such as an oil pump and a water pump, their load torque (pumping load) is large while their rotating inertia torque is relatively small. Therefore, even without one-way clutch, the auxiliary produces approximately no inverse power transmission. Even if an inverse power transmission is produced, its amount of inverse power transmission is small. Accordingly, the above problem does not occur. Further, at the time of decrease in angular velocity of the crank shaft, power expended on the auxiliary (driven shaft) side is large so that an amount of reduction in rotational speed of the driven shaft is large. Accordingly, even if the auxiliary is equipped with a one-way clutch to prevent inverse power transmission as in the case of the alternator, it requires torque for accelerating the driven shaft by the large amount of reduction in rotational speed at the time of increase in angular velocity of the crank shaft. As seen from the above, torque to be subjected by the belt is not substantially different from the case of using no one-way clutch. In these case, provision of a one-way clutch is not an effective measure.

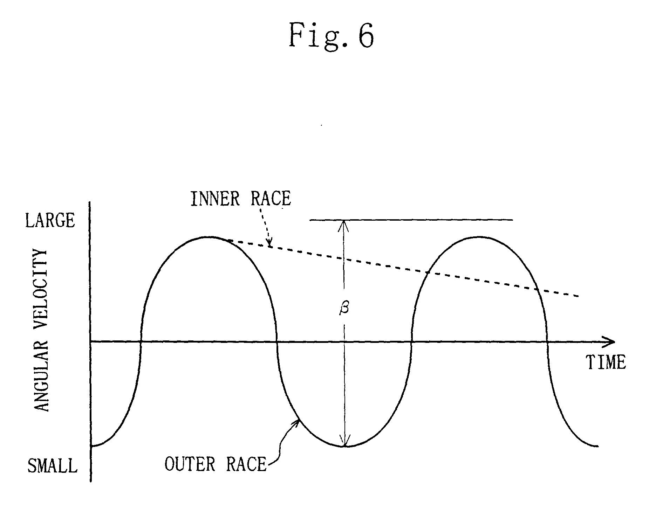

It is not possible to say that any one-way clutches are applicable to the one-way clutch 27 of the invention. When the one-way clutch is switched from the freed state to the locked state, the inner race relatively rotates by a specified angle β of operational delay with respect to the outer race so that the one-way clutch is switched into a substantially locked state. Hence, as shown in Fig. 6, the one-way clutch having an extremely large angle β of operational delay would cause a mis-locking. This interferes with the secure drive of an alternator by power transmission through the belt.

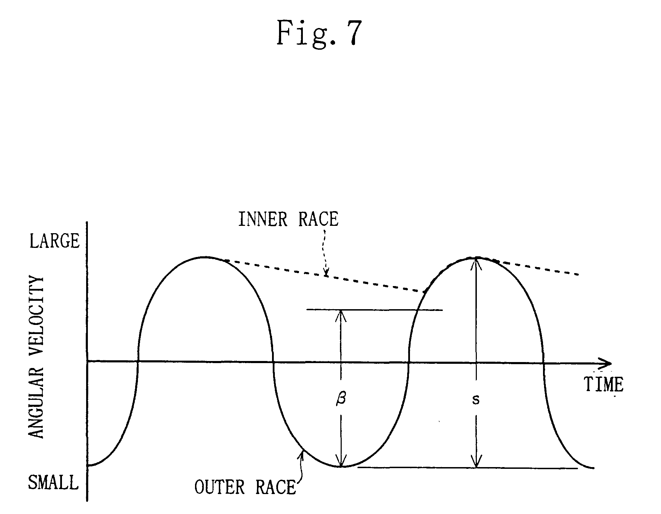

On the contrary, in the present embodiment, as shown in Fig. 7, an angle β of operational delay of the one-way clutch 27 is smaller than an angle s of slight displacement of slight variations in angular velocity transmitted from the crank shaft 2 to the inner race 37 of the one-way clutch 27, so that the outer race 38 can be securely driven into rotation by a rotating force of the inner race 37. Thereby, the belt 3 can be securely driven through the one-way clutch 27 of the alternator 1.

As mentioned so far, according to the present embodiment, since bearings 28, 28 to be needed in association with the provision of the one-way clutch 27 can be disposed in the alternator 1, extension of the alternator shaft 11 following the overall layout change can be dispensed with even if the width of the pulley 1a of the alternator shaft 11 is small. This further facilitates the implementation of an alternator driving apparatus capable of reducing a load of a power transmission belt by using the one-way clutch 27.

At the time, in the above one-way clutch 27, since an angle β of operational delay of the inner race 37 with respect to the outer race 38 is smaller than an angle s of slight displacement of slight variations in angular velocity transmitted from the crank shaft 2 to the inner race 37, it can be avoided that the one-way clutch 27 causes a mis-locking. This allows the outer race 38 to be securely driven into rotation by a rotating force of the inner race 37. Thereby, the belt 3 can be securely driven through the one-way clutch 27 of the alternator 1.

Further, since the bearings 28, 28 are for relatively rotatably supporting the rotor 19 on the alternator shaft 11 and a shaft load from the belt has no effect on the bearings 28, 28, relatively low-cost rolling bearings or sliding bearings are applicable to the above bearings 28, 28. This restricts increase in cost due to the implementation of the alternator driving apparatus.

Furthermore, since the alternator shaft 11 is driven into rotation by the crank shaft 2 through the belt 3 at all times regardless of connection or disconnection of the one-way clutch 27, the vacuum pump 14 for brake can be securely driven through the alternator shaft 11 even at the time of defective operation of the one-way clutch 27.

In the above embodiment, an outer roller type one-way clutch 27 is used. However, if the condition that the one-way clutch to be used can set an angle β of operational delay smaller than a specified angle of displacement is satisfied, the type of the one-way clutch is not particularly limited. For example, a ratchet type one-way clutch may be also applicable.

In the above embodiment, description is made about the alternator driving apparatus of the diesel engine D. The apparatus of the invention may be applicable to a gasoline engine.

Further, in the above embodiment, a V-belt 3 is used as a power transmission belt. However, other types of belts such as a V-ribbed belt may be used in the invention.

Furthermore, in the above embodiment, the driving apparatus having a serpentine layout is described. However, the layout of the driving apparatus is optional. Layouts other than the serpentine type may be also applicable.

### [Industrial Applicability]

As mentioned so far, according to the alternator driving apparatus of the engine and the alternator as an engine auxiliary used in the same, in order to dispose a one-way clutch in a rotation transmitting path of the alternator driving apparatus thereby reducing a load applied to a power transmission belt, the one-way clutch is interposed between an alternator shaft and a rotor in the alternator. Thereby, bearings to be required due to the provision of the one-way clutch can be disposed not between the alternator shaft and a pulley on the alternator shaft but in the alternator. This eliminates the need for the extension of the alternator shaft following the overall layout change of the apparatus, even if the width of the pulley is small. As a result, an alternator driving apparatus with the one-way clutch can be readily implemented. Further, since a shaft load from the belt has no effect on the bearings, relatively low-cost rolling bearings or sliding bearings are applicable to the above bearings thereby restricting the cost from increasing due to the implementation of the apparatus.

## Claims

1. An alternator as an engine auxiliary **characterised in that** a one-way clutch (27) is interposed between an alternator shaft (11) and a rotor (19), said one-way clutch (27) transmitting a rotating force of the alternator shaft (11) to the rotor (19) at the time of increase in angular velocity during slight variations in angular velocity of the alternator shaft (11) while interrupting transmission of rotation between the rotor (19) and the alternator shaft (11) at the time of decrease in angular velocity during slight variations
a driving side rotating member (37) connected to the alternator shaft (11) of the alternator (1) to rotate together with the alternator shaft (11); and a driven side rotating member (38) which is connected to the rotor (19) of the alternator (1) to rotate together with the rotor (19) and is engageable with the driving side rotating member (37) in a rotating direction,
the one-way clutch (27) is composed so as to operate, at the time of increase in angular velocity during slight variations in angular velocity of the crank shaft (2), to switch an engaging relationship between both the driving side and driven side rotating members (37), (38) into a locked state thereby transmitting to the rotor (19) a rotating force of the alternator shaft (11) from the crank shaft (2), and so as to operate, at the time of decrease in angular velocity during slight variations in angular velocity of the crank shaft (2), to switch the engaging relationship between both the driving side and driven side rotating members (37), (38) into a freed state thereby interrupting transmission of rotating inertia torque from the rotor (19) to the crank shaft (2), and
when the engaging relationship between both the driving side and driven side rotating members (37), (38) is switched from the freed state to the locked state at the time of increase in angular velocity during slight variations in angular velocity of the crank shaft (2), an angle (β) of operational delay of the driving side rotating member (37) with respect to the driven side rotating member (38) is smaller in angular velocity of the alternator shaft (11) to prevent rotating inertia torque of the rotor (19) from being inversely transmitted to the alternator shaft (11).

2. An alternator driving apparatus of an engine according to claim 1, in which a crank shaft (2) of an engine (D) is used as a driving shaft, an alternator shaft (11) of an alternator (1) with a rotor (19) having inertia for rotation larger than a load for electric power generation is used as a driven shaft, and a rotatively driving force of the crank shaft (2) followed by slight variations in angular velocity is transmitted to the alternator shaft (11) through a power transmission belt (3) wound between the crank shaft (2) and the alternator shaft (11) thereby driving the rotor (19) into rotation,
**characterised in that** between the alternator shaft (11) and the rotor (19), a one-way clutch (27) is interposed for transmitting to the rotor (19) a rotating force of the alternator shaft (11) from the crank shaft (2) at the time of increase in angular velocity during slight variations in angular velocity of the crank shaft (2) while interrupting transmission of rotation between the rotor (19) and the alternator shaft (11) at the time of decrease in angular velocity during slight variations in angular velocity of the crank shaft (2) to prevent rotating inertia torque of the rotor (19) from being inversely transmitted to the crank shaft (2) through the power transmission belt (3).

3. An alternator driving apparatus of an engine according to claim 2, **characterised in that**
the one-way clutch comprises: than an angle (s) of slight displacement of slight variations in angular velocity transmitted from the crank shaft (2) to the driving side rotating member (37).

4. An alternator driving apparatus of an engine according to claim 2, **characterised in that**
the one-way clutch (27) is provided at both ends along the axis of the alternator shaft (11) with a pair of bearings (28), (28) for relatively rotatably supporting the rotor (19) on the alternator shaft (11), respectively.

5. An alternator driving apparatus of an engine according to claim 2, **characterised in that**
the engine (D) is a diesel engine for automobile and is provided with a vacuum pump (14) for automotive brake, and
the vacuum pump (14) is power-transmittably connected to the alternator shaft (11) of the alternator (1) to rotate together with the alternator shaft (11).

## Patentansprüche

1. Generator als Motorzusatzaggregat, **dadurch gekennzeichnet, daß** zwischen einer Generatorwelle (11) und einem Rotor (19) eine Einwegkupplung (27) eingebaut ist, welche Einwegkupplung (27) eine Drehkraft der Generatorwelle (11) auf den Rotor (19) im Zeitpunkt zunehmender Winkelgeschwindigkeit während geringfügiger Schwankungen der Winkelgeschwindigkeit der Generatorwelle (11) überträgt, während sie die Übertragung der Drehung zwischen dem Rotor (19) und der Generatorwelle (11) im Zeitpunkt der Abnahme der Winkelgeschwindigkeit während geringfügiger Schwankungen der Winkelgeschwindigkeit der Generatorwelle (11) unterbricht, damit das Trägheitsdrehmoment des Rotors (19) nicht in entgegengesetzter Richtung auf die Generatorwelle (11) übertragen wird.

2. Generatorantrieb eines Motors nach Anspruch 1, bei dem eine Kurbelwelle (2) eines Motors (D) als Antriebswelle benutzt wird, eine Generatorwelle (11) eines Generators (1) mit einem Rotor (19), dessen Drehträgheit größer ist als eine Belastung zur Stromerzeugung, als angetriebene Welle benutzt wird, und eine Drehantriebskraft der Kurbelwelle (2) mit anschließenden geringfügigen Schwankungen der Winkelgeschwindigkeit auf die Generatorwelle (11) übertragen wird über einen Kraftübertragungsriemen (3), der zwischen der Kurbelwelle (2) und der Generatorwelle (11) ausgespannt ist, wodurch der Rotor (19) in Drehung versetzt wird,
**dadurch gekennzeichnet, daß** zwischen die Generatorwelle (11) und den Rotor (19) eine Einwegkupplung (27) gesetzt ist, um auf den Rotor (19) eine Drehkraft der Generatorwelle (11) von der Kurbelwelle (2) im Zeitpunkt einer Zunahme der Winkelgeschwindigkeit während geringfügiger Schwankungen der Winkelgeschwindigkeit der Kurbelwelle (2) zu übertragen, während die Übertragung der Drehung zwischen dem Rotor (19) und der Generatorwelle (11) unterbrochen wird im Zeitpunkt der Abnahme der Winkelgeschwindigkeit während geringfügiger Schwankungen der Winkelgeschwindigkeit der Kurbelwelle (2), um zu verhindern, daß ein Trägheitsdrehmoment des Rotors (19) rückwirkend auf die Kurbelwelle (2) über den Antriebsriemen (3) übertragen wird.

3. Generatorantrieb eines Motors, nach Anspruch 2, **dadurch gekennzeichnet, daß**
die Einwegkupplung aufweist:
ein antriebsseitiges rotierendes Teil (37), das mit der Generatorwelle (11) des Generators (1) zur gemeinsamen Rotation mit der Generatorwelle (11) verbunden ist; und ein abtriebsseitiges rotierendes Teil (38), das zur gemeinsamen Rotation mit dem Rotor (19) des Generators (1) verbunden ist und mit dem antriebsseitigen rotierenden Teil (37) in einer Drehrichtung verbindbar ist,
daß die Einwegkupplung (27) so aufgebaut ist, daß sie im Zeitpunkt der Zunahme der Winkelgeschwindigkeit während geringfügiger Schwankungen der Winkelgeschwindigkeit der Kurbelwelle (2) ein Eingriffsverhältnis zwischen dem antriebsseitigen und dem abtriebsseitigen rotierenden Teil (37), (38) herstellt, wodurch auf den Rotor (19) von der Kurbelwelle (2) her eine Drehkraft der Generatorwelle (11) übertragen wird, und im Zeitpunkt der Abnahme der Winkelgeschwindigkeit während geringfügiger Schwankungen der Winkelgeschwindigkeit der Kurbelwelle (2) das Eingriffsverhältnis zwischen dem antriebsseitigen und dem abtriebsseitigen rotierenden Teil (37), (38) umschaltet in einen Freigabezustand, wodurch die Übertragung von Trägheitsdrehmoment von dem Rotor (19) auf die Kurbelwelle (2) unterbrochen wird, und
wenn das Eingriffsverhältnis zwischen dem antriebsseitigen und dem abtriebsseitigen rotierenden Teil (37), (38) umgeschaltet wird von dem Freigabezustand in den Verriegelungszustand im Zeitpunkt der Zunahme der Winkelgeschwindigkeit während geringfügiger Schwankungen der Winkelgeschwindigkeit der Kurbelwelle (2), ein Betriebsverzögerungswinkel (β) des antriebsseitigen rotierenden Teils (37) gegenüber dem abtriebsseitigen rotierenden Teil (38) kleiner ist als ein Winkel (s) einer leichten Verschiebung von geringfügigen Schwankungen der von der Kurbelwelle (2) auf das antriebsseitige Rotationsteil (37) übertragenen Winkelgeschwindigkeit.

4. Generatorantrieb eines Motors, nach Anspruch 2, **dadurch gekennzeichnet, daß**
die Einwegkupplung (27) an beiden Enden längs der Achse der Generatorwelle (11) mit je einem Lager (28), (28) als Drehlager zur Aufnahme des Rotors (19) auf der Generatorwelle (11) versehen ist.

5. Generatorantrieb eines Motors, nach Anspruch 2, **dadurch gekennzeichnet, daß**
der Motor (D) ein Kraftfahrzeug-Dieselmotor ist und mit einer Unterdruckpumpe (14) für eine Kraftfahrzeugbremse ausgestattet ist, und
die Unterdruckpumpe (14) zur Antriebsübertragung verbunden ist mit der Generatorwelle (11) des Generators (1) und mit der Generatorwelle (11) umläuft.

## Revendications

1. Alternateur en tant qu'élément auxiliaire d'un moteur, **caractérisé en ce qu'**un embrayage unidirectionnel (27) est interposé entre un arbre d'alternateur (11) et un rotor (19), ledit embrayage unidirectionnel (27) transmettant une force rotative de l'arbre d'alternateur (11) au rotor (19) au moment de l'augmentation en vitesse angulaire pendant de faibles variations dans la vitesse angulaire de l'arbre d'alternateur (11) alors qu'il interrompt la transmission de la rotation entre le rotor (19) et l'arbre d'alternateur (11) au moment de la diminution en vitesse angulaire pendant de faibles variations dans la vitesse angulaire de l'arbre d'alternateur (11) pour empêcher le couple d'inertie de rotation du rotor (19) d'être inversement transmis à l'arbre d'alternateur (11).

2. Dispositif d'entraînement d'un alternateur de moteur selon la revendication 1, dans lequel un vilebrequin (2) d'un moteur (D) est utilisé comme arbre d'entraînement, un arbre d'alternateur (11) d'un alternateur (1) comportant un rotor (19) présentant une inertie de rotation supérieure à une charge pour la production d'énergie électrique étant utilisé comme arbre entraîné, et une force d'entraînement rotative du vilebrequin (2) suivie par de faibles variations en vitesse angulaire est transmise à l'arbre d'alternateur (11) par l'intermédiaire d'une courroie de transmission de force (3) enroulée entre le vilebrequin (2) et l'arbre d'alternateur, (11) entraînant de la sorte le rotor (19) en rotation,
**caractérisé en ce qu'**entre l'arbre d'alternateur (11) et le rotor (19) un embrayage unidirectionnel (27) est interposé pour transmettre au rotor (19) une force rotative de l'arbre d'alternateur (11) à partir du vilebrequin (2) au moment de l'augmentation en vitesse angulaire pendant de faibles variations en vitesse angulaire du vilebrequin (2) alors qu'il interrompt la transmission de la rotation entre le rotor (19) et l'arbre d'alternateur (11) au moment de la diminution en vitesse angulaire pendant de faibles variations en vitesse angulaire du vilebrequin (2) pour empêcher le couple d'inertie de rotation du rotor (19) d'être inversement transmis au vilebrequin (2) par l'intermédiaire de la courroie de transmission de force (3).

3. Dispositif d'entraînement d'un alternateur de moteur selon la revendication 2, **caractérisé en ce que** l'embrayage unidirectionnel comporte :
un élément rotatif (37) côté entraînement, raccordé à l'arbre d'alternateur (11) de l'alternateur (1) pour tourner ensemble avec l'arbre d'alternateur (11) ; et un élément rotatif (38) côté entraîné qui est raccordé au rotor (19) de l'alternateur (1) pour tourner ensemble avec le rotor (19) et qui peut être mis en prise avec l'élément rotatif (37) côté entraînement dans une direction de rotation,
l'embrayage unidirectionnel (27) qui est constitué de manière à établir au moment de l'augmentation en vitesse angulaire pendant de faibles variations en vitesse angulaire du vilebrequin (2) un rapport d'embrayage entre tous deux les éléments rotatifs (37), (38) côté entraînement et côté entraîné en état de prise verrouillé, transmettant de la sorte au rotor (19) une force de rotation de l'arbre d'alternateur (11) à partir du vilebrequin (2), et pour commuter, au moment de la diminution en vitesse angulaire pendant de faibles variations en vitesse angulaire du vilebrequin (2), le rapport d'embrayage entre tous deux les éléments rotatifs (37), (38) côté entraînement et côté entraîné en état hors prise, interrompant de la sorte la transmission du couple d'inertie de rotation entre le rotor (19) et le vilebrequin (2), et
lorsque le rapport d'embrayage entre tous deux les éléments rotatifs (37), (38) côté entraînement et côté entraîné est commuté de l'état hors prise à l'état en prise au moment de l'augmentation de la vitesse angulaire pendant de faibles variations en vitesse angulaire du vilebrequin (2), un angle (β) de retard opérationnel de l'élément rotatif (37) côté entraînement par rapport à l'élément rotatif (38) côté entraîné est plus petit qu' un angle (s) de léger décalage de faibles variations en vitesse angulaire transmise à partir du vilebrequin (2) à l'élément rotatif (37) côté entraînement.

4. Dispositif d'entraînement d'un alternateur de moteur selon la revendication 2, **caractérisé en ce que**
l'embrayage unidirectionnel (27) est pourvu aux deux extrémités le long de l'axe de l'arbre d'alternateur (11) d'un coussinet (28), (28) comme appui rotatif du rotor (19) sur l'arbre d'alternateur (11).

5. Appareil d'entraînement d'alternateur de moteur selon la revendication 2, **caractérisé en ce que**
le moteur (D) est un moteur diesel destiné à une automobile et est pourvu d'une pompe à vide (14) pour un frein d'automobile et
la pompe à vide (14) est raccordée pour la transmission de force à l'arbre d'alternateur (11) de l'alternateur (1) et tourne ensemble avec l'arbre d'alternateur (11).
